# EUROPÄISCHE PATENTSCHRIFT

(11) **EP 2 737 178 B1**
(45) Veröffentlichungstag und Bekanntmachung des Hinweises auf die Patenterteilung: **23.05.2018**
(21) Anmeldenummer: 12759628.6
(22) Anmeldetag: 25.07.2012
(51) Int. Cl.: F01D 5/00, F01D 21/04, F01D 25/24, F01D 25/26

(54) **VERFAHREN ZUM HERSTELLEN, REPARIEREN UND/ODER AUSTAUSCHEN EINES TRIEBWERKGEHÄUSES, SOWIE EIN ENTSPRECHENDES GEHÄUSE**
METHOD FOR PRODUCING, REPAIRING AND/OR EXCHANGING AN ENGINE HOUSING, AND A CORRESPONDING HOUSING
PROCÉDÉ DE FABRICATION, DE RÉPARATION ET/OU DE REMPLACEMENT D'UN CARTER DE PROPULSEUR, AINSI QUE CARTER CORRESPONDANT

(30) Priorität: 29.07.2011 DE 102011108957
(43) Veröffentlichungstag der Anmeldung: 04.06.2014
(73) Patentinhaber: MTU Aero Engines GmbH, 80995 München (DE)
(72) Erfinder: GEIGER, Peter, 80997 München (DE)
(86) Internationale Anmeldenummer: PCT/DE2012/000748
(87) Internationale Veröffentlichungsnummer: WO 2013/017118

(56) Entgegenhaltungen:
- EP-A2- 1 878 873
- DE-A1-102008 002 847
- DE-A1-102008 015 342
- FR-A1- 2 875 850
- US-B1- 6 652 222
- K EVANS: "Auxetic polymers: a new range of materials", ENDEAVOUR, Bd. 15, Nr. 4, 1. Januar 1991 (1991-01-01) , Seiten 170-174, XP055001332, ISSN: 0160-9327, DOI: 10.1016/0160-9327(91)90123-S
- STOTT P J ET AL: "A GROWTH INDUSTRY", MATERIALS WORLD, THE INSTITUTE OF MATERIALS, LONDON, GB, Bd. 8, 1. Oktober 2000 (2000-10-01), Seiten 12-14, XP008024964, ISSN: 0967-8638

## Beschreibung

Die vorliegende Erfindung betrifft ein Verfahren zum Herstellen bzw. Ausbilden, Reparieren und/oder Austauschen eines Triebwerkgehäuses, sowie ein derartiges Gehäuse.

Aus der EP 1 878 873 A2 ist eine Gasturbine bekannt. In dem Gehäuse einer solchen Gasturbine sind rotierende Schaufeln angeordnet. Bricht eine solche rotierende Schaufel ab, so muss verhindert werden, dass die abgebrochene Schaufel das Gehäuse durchschlägt.

Bisher werden daher solche Gehäuse mit einer entsprechend großen Wandstärke ausgebildet, um ein Durchschlagen des Gehäuses zu verhindern. Das hat jedoch den Nachteil, dass dies in einem entsprechend hohen Gewicht des Gehäuses resultiert. Des Weiteren kann ein solches Gehäuse, wenn es beispielsweise in einem sehr heißen Bereich eingesetzt wird, nicht durch das Anordnen von Fasergewebe gedämmt werden, so dass auch hier die Wand des Gehäuses entsprechend aufgedickt werden muss und das Gewicht des Gehäuses erheblich erhöht wird. Aus der US 6,652,222 B1 ist ein Fan-Gehäuse bekannt, der aus Metalschaum und Kevlar gebildet ist. Der Erfindung liegt nun die Aufgabe zugrunde, ein verbessertes Gehäuse, sowie ein Verfahren zum Herstellen bzw. Ausbilden, Reparieren und/oder Austauschen des Gehäuses bereitzustellen. Gemäß der Erfindung wird nun ein Verfahren zum Ausbilden, zum Reparieren und/oder zum Austauschen eines Gehäuses mit wenigstens zwei Schalen und einem dazwischen angeordneten Strukturteil bereitgestellt, sowie ein derartiges Gehäuse.

Genauer gesagt wird ein Verfahren bereitgestellt zum Herstellen, Reparieren und/oder Austauschen eines Triebwerkgehäuses eines Flugzeugtriebwerks, mit wenigstens zwei Schalen, zwischen denen ein Strukturteil ausgebildet ist, wobei das Verfahren den folgenden Schritt aufweist:
Schichtweises Aufbauen der wenigstens zwei Schalen gemeinsam mit dem Strukturteil mittels eines generativen Fertigungsverfahrens, wobei das Strukturteil wenigstens eine poröse Struktur und/oder Wabenstruktur aufweist, dadurch gekennzeichnet, dass die poröse Struktur und / oder Wabenstruktur als eine auxetische Struktur ausgebildet werden. Des Weiteren wird ein Triebwerksgehäuse, mit wenigstens zwei Schalen und einem zwischen den Schalen ausgebildeten Strukturteil, wobei das Gehäuse durch ein generatives Fertigungsverfahren hergestellt ist und das Strukturteil wenigstens eine poröse Struktur und/oder Wabenstruktur aufweist, dadurch gekennzeichnet. dass die poröse Struktur und /oder Wabenstruktur als eine auxetische Struktur ausgebildet werden. Das Verfahren und das Gehäuse haben den Vorteil, dass ein Gehäuse bereitgestellt werden kann, welches ein Strukturteil mit einer porösen Struktur und/oder Wabenstruktur aufweist, zur Wärmedämmung und Dämpfung sowie zur Erhöhung der Durchschlagfestigkeit des Gehäuses. Das Strukturteil hat zudem den Vorteil, dass das Gewicht des Gehäuses reduziert werden kann und insbesondere auch in sehr heißen Bereichen z.B. im hinteren Teil eines Flugzeugtriebwerks eingesetzt werden kann. Mit herkömmlichen Dämmungsmaterialien, wie beispielsweise Fasergeweben, wie sie bisher zur Dämmung eines Gehäuses eingesetzt werden, ist das nicht möglich. Vorteilhafte Ausgestaltungen und Weiterbildungen der Erfindung ergeben sich aus den Unteransprüchen sowie der Beschreibung unter Bezugnahme auf die Zeichnungen.

In einer Ausführungsform der Erfindung ist erfolgt ein schichtweises Aufbauen einer Stützstruktur mittels des generativen Fertigungsverfahrens und ein anschließendes Ausbilden des Gehäuses mittels des generativen Fertigungsverfahrens auf der Stützstruktur und
ein Entfernen der Stützstruktur nach Fertigstellung des Gehäuses. Die Stützstruktur hat den Vorteil, dass das eigentliche Gehäuse nicht direkt auf dem Träger oder der Grundplatte aufgebaut werden muss.

In einer anderen Ausführungsform erfolgt das Ausbilden wenigstens einer Schale als eine Schale mit einer massiven Wandung. Die poröse Struktur ist beispielsweise eine Schaumstruktur. Eine auxetische Struktur hat den Vorteil, dass dadurch die Dämpfungseigenschaften des Gehäuses verbessert und die Steifigkeit des Gehäuses gezielt beeinflusst werden kann. Außerdem die Wärmedämmung des Gehäuses verbessert werden, wie auch durch eine nicht-auxetische Struktur.

In einer anderen Ausführungsform ist die auxetische Struktur vorzugsweise in Richtung einer Hauptbelastung des Gehäuses ausgerichtet. Dadurch kann ein verbessertes Containment- oder Abschirmungsverhalten des Gehäuses gegen ein ungewolltes Durchschlagen von abgebrochenen rotierenden Teilen durch das Gehäuse erreicht werden.

In einer weiteren Ausführungsform der Erfindung wird das Gehäuse mit wenigstens einer Zwischenschale zwischen der äußeren Schale und der inneren Schale ausgebildet, wobei ein Strukturteil zwischen der inneren Schale und der Zwischenschale und ein Strukturteil zwischen der Zwischenschale und der äußeren Schale ausgebildet wird. Ein Strukturteil kann dabei vor allem zur Wärmedämmung vorgesehen werden, während das andere Strukturteil vor allem zur Verbesserung des Containments oder des Durchschlagschutzes des Gehäuses vorgesehen werden kann. Ein solches Gehäuse hat den Vorteil, dass es sehr viel leichter ist als ein entsprechendes konventionelles Gehäuse, das bisher zur Erzielung eines Durchschlagschutzes mit einer entsprechend dicken Wandung ausgebildet werden muss.

Die Erfindung wird nachfolgend anhand der in den schematischen Figuren der Zeichnungen angegebenen Ausführungsbeispiele näher erläutert. Es zeigen:
Fig. 1 eine Schnittansicht eines Flugzeugtriebwerks in welchem ein Gehäuse gemäß der Erfindung einsetzbar ist;
Fig. 2 eine Prinzipskizze der Herstellung eines erfindungsgemäßen Gehäuses;
Fig. 3 eine Schnittansicht des erfindungsgemäßen Gehäuses gemäß Fig. 2;
Fig. 4 eine Schnittansicht einer Variante des erfindungsgemäßen Gehäuses gemäß Fig. 2;
Fig. 5 eine Schnittansicht eines weiteren erfindungsgemäßen Gehäuses;
Fig. 6 eines Schnittansicht einer weiteren Ausführungsform des erfindungsgemäßen Gehäuses;
   und
Fig. 7 ein Ablaufdiagramm der Herstellung eines erfindungsgemäßen Gehäuses.

In den Figuren sind gleiche Elemente oder ähnliche Elemente mit gleichen Bezugszeichen versehen, sofern nichts Gegenteiliges ausgeführt ist.

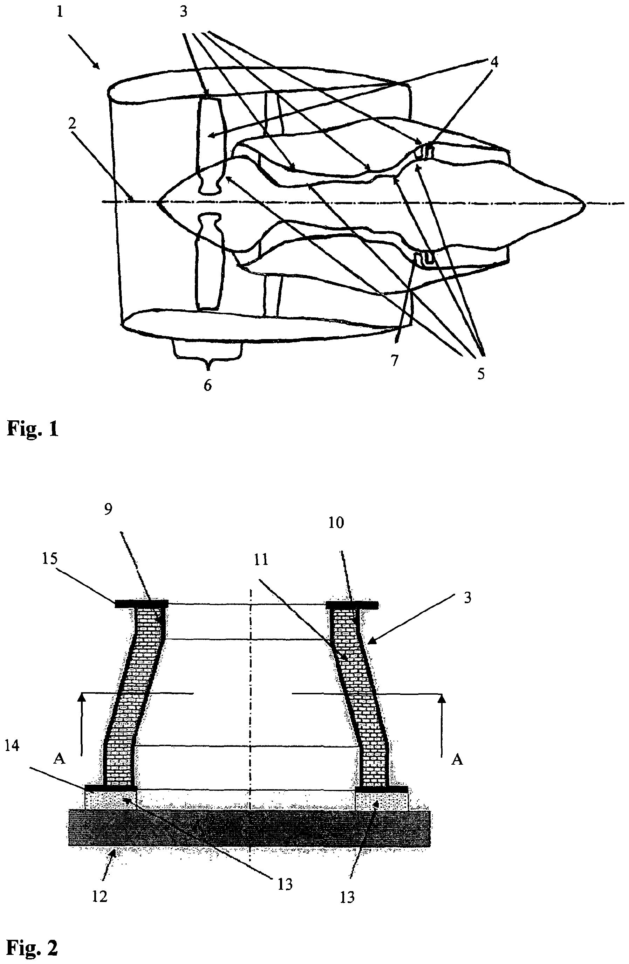

In Fig. 1 ist ein Flugzeugtriebwerk 1 in einer Schnittansicht gezeigt, als ein Beispiel für ein Bauteil mit einem Gehäuse 3, in welchem rotierende Teile angeordnet sind. Das Gehäuse 3 ist hierbei zum Abfangen der rotierenden Teile ausgebildet, für den Fall, dass diese sich ungewollt lösen oder abbrechen und davonfliegen.

Solche Triebwerke 1 oder Turbomaschinen enthalten Bauelemente, wie zum Beispiel Laufschaufeln 4, die mit zum Teil sehr hohen Drehzahlen um eine Drehachse 2 im Gehäuse rotieren und entsprechend hohen Fliehkräften ausgesetzt sind. Wenn diese rotierenden Bauelemente sich lösen oder brechen, so fliegen sie mit sehr hoher Rotationsenergie radial nach außen. Um in diesem Fall zum Beispiel das Flugzeug, an dem das Triebwerk 1 hängt, nicht zu gefährden, müssen die Gehäuse 3, die die rotierenden Bauelemente umschließen, so ausgelegt sein, dass diese rotierenden abgebrochenen oder abgelösten Bauelemente von diesen Gehäusestrukturen gehalten und nicht nach außen gelassen werden. Man spricht dabei von Containment.

Außerdem können zusätzlich an dem Gehäuse 3 auch weitere Bauelemente befestigt sein, wie Schaufelelemente, z.B. Leitschaufeln 7, im Falle des in Fig. 1 gezeigten Triebwerks 1. Diese Leitschaufeln 7 sind an der Innenseite des Gehäuses 3 fixiert, wobei sie fest stehen und der Strömungsumlenkung dienen. Dabei können die Leitschaufeln 7 einteilig mit dem Gehäuse 3 ausgebildet oder separat an dem Gehäuse 3 befestigt werden. Die verschiedenen Strömungsquerschnitte des in das Triebwerk eingesaugten Mediums ist mit dem Bezugszeichen 5 in Fig. 1 versehen.

Eine klassische Abschirmung (Containment) des Gehäuses 3 gegen davonfliegende Bauelemente wird durch entsprechende Dimensionierung der Wandstärke des Gehäuses 3 erzielt. Dazu werden Gehäuse 3 mit einer entsprechend großen Wandstärke ausgebildet, um rotierende und sich lösende Teile, wie z.B. Laufschaufeln 4, abzufangen. Die großen Wandstärken, die hierfür bei dem Bauteil notwendig sind, führen jedoch zu einer deutlichen Erhöhung des Gewichts des Gehäuses 3, was insbesondere im Flugzeugbau unerwünscht ist.

Mit neuen Bauweisen der Triebwerke 1 werden die abzufangenden Rotationsenergien von abgebrochenen oder abgelösten Bauelementen immer größer und damit auch die Gehäuse 3 wesentlich dicker und schwerer, was für die Leistungsdaten des Triebwerks 1 im Flugzeug gravierende Nachteile in sich bringt.

Im Bereich des Fans 6 kann man zum Beispiel um das Gehäuse 3 Fasergewebe anordnen. Dieses Verfahren kann man aber im hinteren Bereich des Triebwerks 1 nicht anwenden, da die Temperaturen dort zu heiß sind: Das heißt, beim jetzigen Stand der Technik kann man sich nur mit der klassischen Aufdickung des Gehäuses behelfen.

Gemäß der vorliegenden Erfindung wird nun ein Gehäuse 3, in welchem rotierende Bauelemente 8 angeordnet sind, insbesondere ein Triebwerkgehäuse 3 oder ein Triebwerkgehäuseabschnitt eines Flugzeugtriebwerks, wie es beispielhaft in Fig. 1 dargestellt ist, mittels eines generativen Fertigungsverfahrens aus wenigstens zwei Schalen und einem dazwischen angeordneten Strukturteil ausgebildet, das wenigstens eine poröse Struktur oder eine Wabenstruktur aufweist, wobei die poröse Struktur, wie beispielsweise eine Schaumstruktur, und/oder die Wabenstruktur als eine auextische Struktur oder eine nicht-auxetische Struktur ausgebildet ist. Das zwischen den beiden Schalen ausgebildete Strukturteil ist dabei geeignet, zusammen mit wenigstens einer der Schalen ein davonfliegendes rotierendes Bauelement oder ein Teil eines Bauelements derart abzufangen, dass dieses nicht durch das Gehäuse austritt.

In Fig. 2 ist eine Prinzipskizze der Herstellung eines erfindungsgemäßen Gehäuses 3, z.B. ein Gehäuse 3 eines Flugzeugtriebwerks 1, mittels eines generativen Fertigungsverfahrens gezeigt. In dem Gehäuse 3 werden später ein oder mehrere rotierende Bauelemente, wie z.B. Laufschaufeln, angeordnet, die mittels des Gehäuses 3 abgefangen werden können, sollten sie sich ablösen oder abbrechen. Das Gehäuse 3 ist in Fig. 2 zum besseren Verständnis in einer Schnittansicht gezeigt.

Wie zuvor beschrieben weist das Gehäuse 3 wenigstens zwei Schalen 9, 10 auf, eine innere Schale 9 und eine äußere Schale 10, wobei zwischen den beiden Schalen 9, 10 ein Strukturteil 11 ausgebildet ist mit wenigstens einer auxetischen Struktur und/oder einer nicht-auxetischen Struktur, wie beispielsweise einer auxetischen oder nicht-auxetischen Waben- oder Schaumstruktur. Die wenigstens zwei Schalen 9, 10 und das dazwischen angeordnete Strukturteil 11 sind dabei zusammen einteilig oder integral mittels eines generativen Fertigungsverfahrens hergestellt. Die Schalen 9, 10 selbst sind dabei insbesondere massiv ausgebildet.

Zu generativen Fertigungsverfahren gehören beispielsweise das sog. Rapid Manufacturing und das sog. Rapid Prototyping. Bei der generativen Fertigung werden Bauteile insbesondere schichtweise durch Materialauftrag aufgebaut. Dabei wird bei den entsprechenden Verfahren, die z.B. als Lasersintern, Selective Laser Sintering (SLS), Elektronenstrahlsintern, Electron Beam Melting (EBM), LaserCusing, Selective Laser Melting (SLM) oder 3D-Printing bekannt sind, der hinzuzufügende oder aufzutragende Werkstoff in Pulverform verarbeitet. Das Pulver wird dabei z.B. schichtweise auf eine Grundplatte oder einen Träger aufgetragen. Anschließend wird die Pulverschicht in einem Bauteilbereich zum Ausbilden des Bauteils mittels einer Energiestrahlung verfestigt, wie z.B. eines Laserstrahls und/oder Elektronenstrahls. Die Verfestigung der jeweiligen Pulverschicht erfolgt dabei üblicherweise auf Basis von Geometriedaten des herzustellenden Bauteils.

Dabei kann der Bereich der Pulverschicht z.B. abgescannt und der Bauteilbereich der Pulverschicht mittels Energiestrahlung verfestigt werden. Durch Einwirken der Energiestrahlung schmilzt oder versintert das Pulver in diesem Bereich.

Anschließend kann die Grundplatte oder der Träger um eine Schichtdicke verfahren, z.B. abgesenkt, werden. Daraufhin wird eine neue Pulverschicht darüber aufgetragen und wiederum der Bauteilbereich der Pulverschicht mittels Energiestrahlung verfestigt. Auf diese Weise kann Schicht für Schicht das Bauteil aufgebaut werden.

Bei dem erfindungsgemäßen Gehäuse 3 wird zur Ausbildung der beiden Schalen 9, 10 und des dazwischen angeordneten Strukturteils 11 als ein Pulver, insbesondere ein Metallpulver aus wenigstens einem Metall und/oder einer Metalllegierung, eingesetzt und auf einen Träger 12, z.B. die in Fig. 2 gezeigte Grundplatte, Schicht für Schicht aufgebracht. Die jeweilige Pulverschicht wird in ihrem Bauteilbereich mittels Energiestrahlung einer Energiestrahlungsquelle, z.B. einem Laser oder einer Elektronenstrahlquelle, verfestigt. Der Bauteilbereich umfasst dabei den Bereich der ersten Schale 9, den Bereich der zweiten Schale 10 und den Bereich des Strukturteils 11. Anschließend wird die nächste Pulverschicht über die zuletzt selektiv verfestigte Pulverschicht aufgetragen und der Bauteilbereich dieser nächsten Pulverschicht wiederum mittels der Energiestrahlung der Energiestrahlungsquelle verfestigt bis am Ende die verfestigten Bauteilbereiche das fertige Gehäuse 3 mit seinen beiden Schalen 9, 10 und dem Strukturteil 11 bilden.

Die zwei Schalen 9, 10 und/oder das Strukturteil 11 können bei dem generativen Fertigungsverfahren aus demselben Werkstoff oder Werkstoffkombination hergestellt werden oder aus unterschiedlichen Werkstoffen oder Werkstoffkombinationen. Beispielsweise kann eine der Schalen 9, 10, z.B. die äußere Schale 10 bei der generativen Fertigung des Gehäuses 2 teilweise oder vollständig aus Keramik hergestellt werden und die andere Schale und das Strukturteil 11 aus wenigstens einem Metall und/oder einer Metalllegierung.

Ein solches Gehäuses 3 mit einer Keramikschale als äußerer Schale 10 kann beispielsweise als ein Turbinengehäuse eines Triebwerks 1 ausgebildet werden. Das Turbinengehäuse bildet eine Unterkomponente des Triebwerks 1. Ebenso kann das Strukturteil 11 aus einem anderen Metall und/oder Metalllegierung als ein oder beide Schalen 9, 10 des Gehäuses 3 ausgebildet werden.

Wie in dem Ausführungsbeispiel in Fig. 2 gezeigt ist, kann zusätzlich zunächst eine Hilfsstruktur 13 durch das generative Fertigungsverfahren ausgebildet werden, auf welcher im Anschluss das eigentliche Gehäuse 3 mit seinen beiden Schalen 9, 10 und dem dazwischen angeordneten Strukturteil 11 durch das generativer Fertigungsverfahren aufgebaut wird. Die Hilfsstruktur 13 dient dazu, dass das Gehäuse 3 nicht direkt auf der Grundplatte oder dem Träger 12 aufgebaut wird, sondern erste eine gröbere Hilfsstruktur 13 durch das generative Fertigungsverfahren aufgebaut wird, auf der dann das eigentliche Gehäuse 3 durch das generative Fertigungsverfahren aufgebaut wird. Die Hilfsstruktur 13 wird nach der Fertigstellung des Gehäuses 3 wieder entfernt.

Wie in der Ausführungsform des Gehäuses 3 in Fig. 2 gezeigt ist, werden die Schalen 9, 10 beispielsweise mit einem zusätzlichen unteren und oberen Abschluss 14, 15 ausgebildet, so dass das Strukturteil 11 an beiden Enden durch die Abschlüsse 14, 15 vollständig abgedeckt ist und somit das Strukturteil 11 von den beiden Schalen 9, 10 und den Abschlüssen 14, 15 an den Enden vollständig umschlossen ist. Ein oder beide Abschlüsse 14, 15 können optional als ein Flanschabschnitt ausgebildet sein, zum Befestigen an einem weiteren Bauteil (nicht dargestellt).

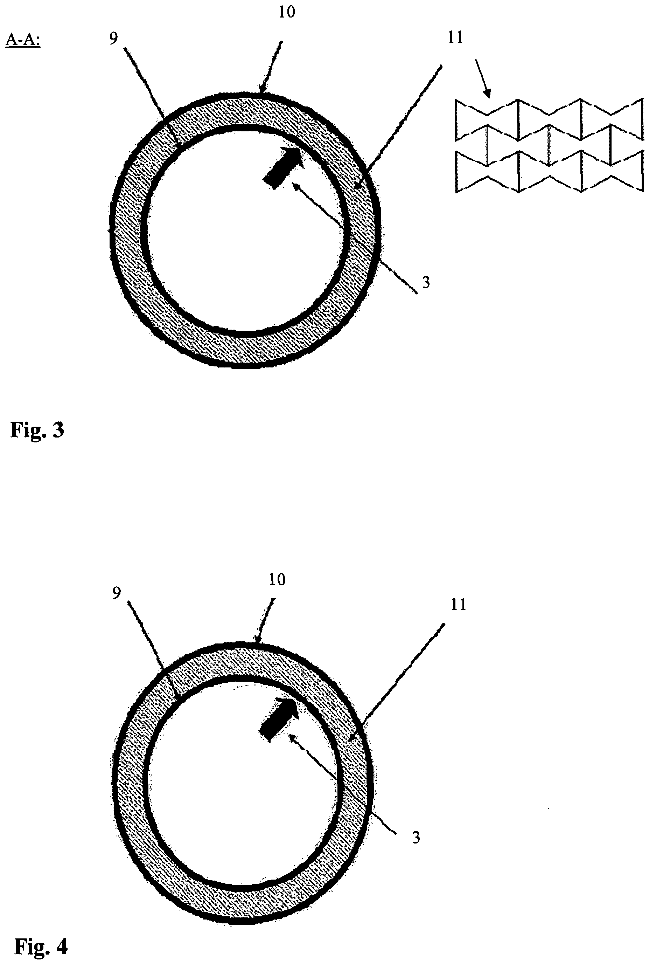

In Fig. 3 ist eine Schnittansicht A-A des erfindungsgemäßen Gehäuses 3 gemäß Fig. 2 gezeigt. Dabei weist das Gehäuse 3, wie zuvor beschrieben, eine äußere und eine innere Schale 9, 10, insbesondere eine massive äußere und innere Schale 9, 10, auf, wobei zwischen den beiden Schalen 9, 10 ein Strukturteil 11 ausgebildet ist. Die Schalen 9, 10 sind hierbei beispielsweise konzentrisch zueinander angeordnet, wie auch in dem Ausführungsbeispiel zuvor in Fig. 2 gezeigt ist.

Das Strukturteil 11 weist bei dieser Ausführungsform der Erfindung, wie sie in Fig. 3 gezeigt ist, eine auxetische Struktur auf. Ein Beispiel einer solchen auxetischen Struktur ist hierbei in dem vergrößerten Ausschnitt in Fig. 3 gezeigt. Die auxetische Struktur ist eine Struktur mit einer negativen Poisson-Zahl. Vorzugsweise ist die auxetische Struktur zwischen den Schalen 9, 10 radial ausgerichtet, so dass sie immer in Richtung oder im Wesentlichen in Richtung der Hauptbelastung wirkt. Die Richtung der Hauptbelastung beim Containment oder beim Abfangen von rotierenden Bauelementen oder Teilen davon wirkt in radialer Richtung und ist in Fig. 3 mit einem Pfeil angedeutet. Die in Fig. 3 gezeigte auxetische Struktur ist beispielsweise eine auxetische Wabenstruktur.

In Fig. 4 ist des Weiteren eine Schnittansicht einer weiteren erfindungsgemäßen Ausführungsform eines Gehäuses 3 gezeigt, wobei sich das Gehäuse 3 gemäß Fig. 4 dabei von dem Gehäuse 3 gemäß Fig. 2 und 3 lediglich dadurch unterscheidet, dass das Strukturteil 11 eine Schaumstruktur aufweist, welche auxetisch oder auch nicht-auxetisch ausgebildet sein kann.

Das Gehäuse 3 weist ebenfalls eine äußere und eine innere Schale 10, 9, insbesondere eine massive äußere und innere Schale, auf, welche beispielsweise konzentrisch zueinander angeordnet sind, wobei zwischen den beiden Schalen 9, 10 das Strukturteil 11 ausgebildet ist. Die Schaumstruktur als Strukturteil 11 zwischen den beiden Schalen 9, 10 ist vorzugsweise so angeordnet, das sie in Containment-Richtung oder im Wesentlichen in Containment Richtung, d.h. hier in radialer Richtung, wirkt. Die Containment-Richtung ist dabei die Richtung, in welcher sich ein rotierendes Bauelement oder ein Teil eines solchen bewegt, nachdem es abgebrochen ist oder sich anderweitig gelöst hat.

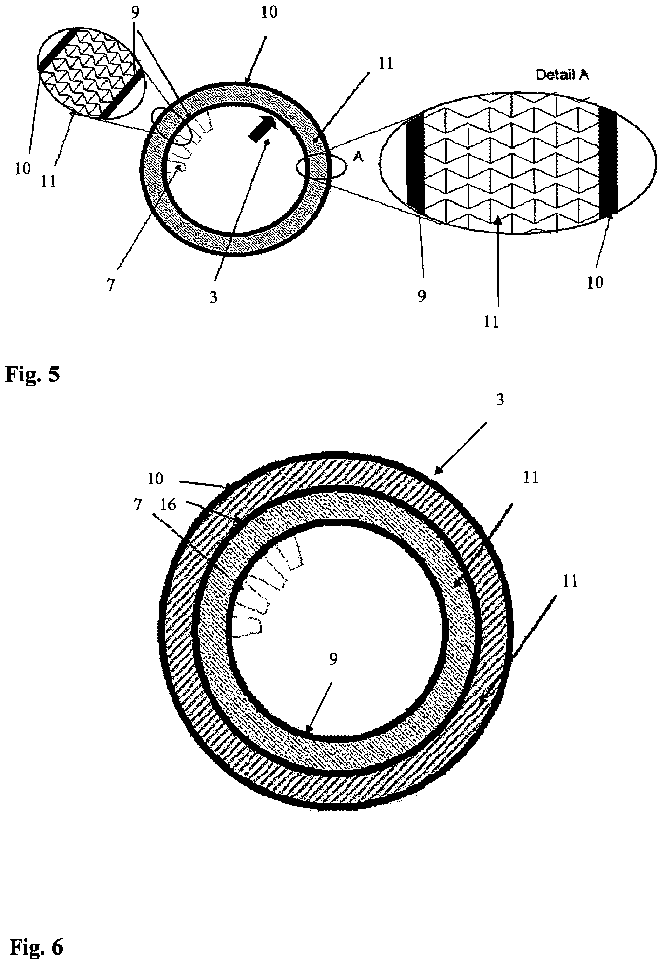

Des Weiteren ist in Fig. 5 eine Schnittansicht eines weiteren Ausführungsbeispiels eines Gehäuses 3 gezeigt. Das Gehäuse 3 weist dabei ebenfalls eine innere Schale 9 und eine äußere Schale 10 auf, insbesondere eine massive innere und äußere Schale, zwischen denen ein Strukturteil 11 ausgebildet ist. Das Strukturteil 11 ist dabei ebenfalls eine Wabenstruktur, insbesondere eine auxetische Struktur. Wie in den beiden vergrößerten Ausschnitten in Fig. 5 gezeigt ist, ist die auxetrische Struktur beispielsweise so angeordnet, dass sie in containment-Richtung oder hier in radialer Richtung wirkt. Die beiden Schalen 9, 10 sind in dem Ausführungsbeispiel wie es in Fig. 5 gezeigt ist, z.B. konzentrischen zueinander angeordnet.

Ein solches Gehäuse 3, wie es z.B. in Fig. 5 gezeigt ist, kann beispielsweise als Triebwerksgehäuse ausgebildet werden, wobei über die äußere Schale 10 dabei dann die Strukturkräfte des Triebwerks geleitet werden. Die innere Schale 9 dient wiederum der Fixierung zum Beispiel von Leitschaufeln 7 und der Definition der Ringraumkontur, innerhalb der das Arbeitsmedium, insbesondere Luft, geleitet und Arbeit verrichtet wird. Die Leitschaufeln 7 können dabei einteilig mit der inneren Schale 9 ausgebildet werden im Rahmen des generativen Fertigungsverfahrens zur Herstellung des Gehäuses 3. Ebenso können die Leitschaufeln 7 auch als separate Teile an der inneren Schale 9 befestigt werden.

In Fig. 6 ist eine weitere Ausführungsform eines erfindungsgemäßen Gehäuses 3 gezeigt. Das Gehäuse 3 weist hierbei mehr als zwei Schalen auf, beispielsweise drei Schalen, d.h. eine innere Schale 9, wenigstens eine Zwischenschale 16 und eine äußere Schale 10. Die Schalen 9, 10, 16 sind dabei insbesondere massiv ausgebildet. An der Innenseite der inneren Schale 9 können, im Falle eines Triebwerksgehäuses, außerdem optional Schaufelelemente, wie z.B. Leitschaufeln 7, ausgebildet oder befestigt sein.

Zwischen der inneren Schale 9 und der Zwischenschale 16 ist, wie in Fig. 6 gezeigt, ein erstes Strukturteil 11 und zwischen der Zwischenschale 16 und der äußeren Schale 10 ein zweites Strukturteil 11 ausgebildet. Ein oder beide Strukturteile 11 können jeweils dieselbe Struktur oder dieselbe Kombination von Strukturen aufweisen. Ebenso können ein oder beide Strukturteil 11 eine Unterschiedliche Struktur oder unterschiedliche Kombinationen von Strukturen aufweisen. Als Struktur oder Strukturen kann wenigstens eines der Strukturteile 11 eine Wabenstruktur und/oder eine poröse Struktur, wie z.B. eine Schaumstruktur, aufweisen. Die Wabestruktur und/oder die poröse Struktur, wie z.B. die Schaumstruktur, kann dabei eine auxetische Struktur oder eine nicht-auxetische Struktur sein.

In dem in Fig. 6 illustrierten Ausführungsbeispiel sind die beiden Strukturteile 11 beispielsweise jeweils eine auxetische Struktur. Wobei die erste auxetische Struktur bzw. das erste Strukturteil 11 zwischen der inneren Schale 9 und der Zwischenschale 16 weist beispielsweise die gleich räumliche Ausrichtung oder eine unterschiedliche räumliche Ausrichtung auf, wie die zweite auxetische Struktur bzw. das zweite Strukturteil 11 zwischen der Zwischenschale 16 und der äußeren Schale 10.

Die Strukturteile 11 können jeweils eine Struktur, z.B. eine auxetische Struktur wie eine auxetische Waben- oder Schaumstruktur, aufweisen. Ebenso können die Strukturteile 11 jeweils eine Kombination aus wenigstens zwei Strukturen aufweisen, beispielsweise eine Kombination aus einer porösen Struktur, z.B. Schaumstruktur, und einer Wabenstruktur oder ein Kombination aus zwei verschiedenen porösen Strukturen oder zwei verschiedenen Wabenstrukturen usw.. Die Strukturen können dabei außerdem auxetische oder nicht-auxetische Strukturen sein.

Ein zusätzliches z.B. poröses oder schaumartiges (z.B. offenporiges oder geschlossenporiges) Strukturteil 11 (Zwischenschicht), welches beispielsweise statt als auxetische Struktur auch als nicht-auxetische Struktur ausgebildet sein kann, kann neben einem auxetischen Strukturteil 11 dazu eingesetzt werden, die Wärmeleitung im Gehäuse 3, die Gesamtsteifigkeit und/oder das Dämpfungsverhalten des Gehäuses 3 zu verbessern und optimal zu gestalten. Das Gehäuse 3 mit seinen wenigstens zwei oder drei Schalen 9, 10, 16 und vorzugsweise wenigstens einem auxetischen Strukturteil 11 und wahlweise wenigstens einem auxetischen oder nicht-auxetischen Strukturteil 11 wird integral mittels eines generativer Fertigungsverfahrens, wie z.B. dem zuvor beschriebenen Lasersintern oder Elektronenstrahlsintern usw. hergestellt. Mit dem generativen Fertigungsverfahren kann insbesondere auch die Mikrostruktur oder auxetische Struktur zwischen zwei Schalen 9, 10 hergestellt werden. Wie zuvor beschrieben ist die auxetische Struktur bzw. das auxetische Strukturteil 11 derart zwischen zwei Schalen 9, 10 ausgebildet, dass es radial so ausgerichtet ist, dass es in Richtung der Hauptbelastung wirkt.

Das Ausbilden eines Gehäuses 3 mit wenigstens zwei Schalen 9, 10 und einem Strukturteil 11 dazwischen lässt sich als Verbund integral nur mit einem generativen Fertigungsverfahren herstellen. Diese Bauweise aus wenigstens zwei Schalen 9, 10 und einem dazwischen ausgebildeten Strukturteil 11 ist für alle Komponenten eines Triebwerks geeignet, in denen sich rotierende Bauelemente im Inneren eines Gehäuse befinden, insbesondere für ein Fan-Gehäuse, ein Verdichter-Gehäuse und ein Turbinen-Gehäuse.

Die Bauweise ist gleichermaßen für Flugtriebwerke, stationäre Gasturbinen, Fahrzeugturbinen und Schiffsgasturbinen geeignet.

Durch das Vorsehen z.B. wenigstens einer auxetischen Struktur als Strukturteil 11 zwischen zwei Schalen 9, 10 eines Gehäuses 3 kann eine bessere Durchschlagsfestigkeit insbesondere bei sich lösenden rotierenden Bauelementen im Inneren des Gehäuses (containment) erreicht werden, bei einem gleichzeitig gegenüber der konventionellen Bauweise reduziertem Gewicht des Gehäuses 3. Außerdem kann durch ein auxetisches Strukturteil 11 die Steifigkeit des Gehäuses 3 gezielt beeinflusst und eine Dämpfung des Gehäuses 3 erhöht werden. Damit kann insgesamt, vor allem bei schnell laufenden Triebwerken, das notwendige Gehäusegewicht verringert werden.

Mit weiteren Strukturteilen 11 oder einem Strukturteil 11 mit mehreren Strukturen, wie z.B. einer Kombination einer auxetischen, porösen Struktur und einer nicht-auxetischen schaumartigen Struktur, kann man die Wärmedämmung des Gehäuses 3 verbessern. Dies macht das Gehäuse 3 thermisch träger, was sich auf das Radialspaltverhalten (und damit auf den Wirkungsgrad und die Stabilität der Komponente bzw. des Triebwerks) eines Rotor-Stator-Systems positiv auswirkt.

Durch ein zusätzliches zweites Strukturteil 11 im Falle von mehr als zwei Schalen 9, 10, in Form beispielsweise einer auxetischen oder nicht-auxetischen Schaumstruktur oder Wabenstruktur, kann außerdem gleichzeitig die Wärmeleitung zu einer äußeren Schale hin behindert und dadurch die Festigkeit erhöht werden.

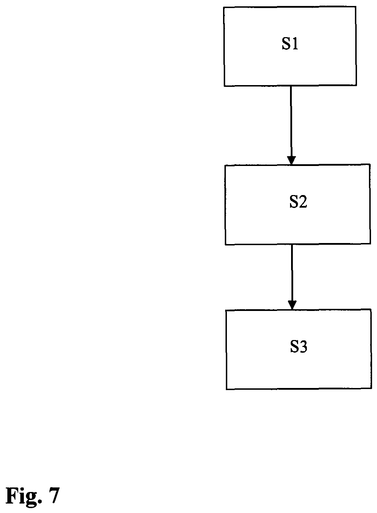

In Fig. 7 ist ein Ablaufdiagramm zum Herstellen, Reparieren und/oder Austauschen eines erfindungsgemäßen Gehäuses gezeigt, welches wenigstens zwei Schalen und ein zwischen den beiden Schalen ausgebildetes Strukturteil aufweist. Beispiele für ein derartiges Gehäuse sind in den Fig. 1 bis 6 gezeigt.

In einem ersten Schritt S1 wird zunächst die Hilfsstruktur des Bauteils ausgebildet. Zum Ausbilden der Hilfsstruktur wird eine Pulverschicht auf eine Grundplatte aufgetragen und anschließend durch eine geeignete Energiestrahlung einer Energiestrahlungsquelle, z.B. einem Laser, ein Hilfsstrukturbereich der Pulverschicht verfestigt. Anschließend wird die Grundplatte um eine Schichtdicke verfahren, z.B. abgesenkt, und die nächste Pulverschicht auf die vorherige Pulverschicht aufgebracht und der Hilfsstrukturbereich dieser Pulverschicht mittels der Energiestrahlung verfestigt. Der Schritt S1 wird solange wiederholt bis die Hilfsstruktur hergestellt ist.

Anschließend wird in einem Schritt S2 das eigentliche Bauteil, hier das Gehäuse mit seinen wenigstens zwei Schalen und dem Strukturteil zwischen den beiden Schalen, sowie gegebenenfalls einem oberen und/oder unteren Abschluss ausgebildet. Dazu wird eine neue Pulverschicht auf die zuletzt verfestigte Pulverschicht aufgebracht und die neue Pulverschicht in einem Bauteilbereich durch eine geeignete Energiestrahlung einer Energiestrahlungsquelle, z.B. einem Laser, verfestigt. Anschließend wird die Grundplatte um eine Schichtdicke verfahren, z.B. abgesenkt, und die nächste Pulverschicht auf die vorherige Pulverschicht aufgebracht und der Bauteilbereich dieser Pulverschicht mittels der Energiestrahlung verfestigt. Der Schritt S2 wird solange wiederholt bis das Gehäuse vollständig aus den verfestigten Bauteilbereichen hergestellt ist.

Anschließend wird in einem Schritt S3 das nicht verfestigte Pulver entfernt und die Stützstruktur von dem Gehäuse entfernt.

Neben einer vollständigen Herstellung des Gehäuses kann ebenso auch auf einem bereits vorhandenen Teil eines Gehäuses, z.B. im Rahmen einer Reparatur oder einer Ergänzung, das restliche Gehäuse ergänzt werden.

Des Weiteren ist der Schritt S1 des Herstellens einer zusätzlichen Stützstruktur optional.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Insbesondere sind die zuvor beschriebenen Ausführungsbeispiele miteinander kombinierbar, insbesondere einzelne Merkmale davon.

### Bezugszeichenliste

- 1: Triebwerk
- 2: Drehachse
- 3: Gehäuse
- 4: Laufschaufel
- 5: Strömungsquerschnitt
- 6: Fan
- 7: Leitschaufel
- 8: rotierendes Bauteil
- 9: innere Schale
- 10: äußere Schale
- 11: Strukturteil
- 12: Träger oder Grundplatte
- 13: Hilfsstruktur
- 14: unterer Abschluss
- 15: oberer Abschluss
- 16: Zwischenschale

## Patentansprüche

1. Verfahren zum Herstellen, Reparieren und/oder Austauschen eines Triebwerkgehäuses eines Flugzeugtriebwerks, mit wenigstens zwei Schalen (9, 10, 16), zwischen denen ein Strukturteil (11) ausgebildet ist, wobei das Verfahren den folgenden Schritt aufweist:
Schichtweises Aufbauen der wenigstens zwei Schalen (9, 10, 16) gemeinsam mit Strukturteil (11) mittels eines generativen Fertigungsverfahrens, wobei das Strukturteil (11) wenigstens eine poröse Struktur und/oder Wabenstruktur aufweist, **dadurch gekennzeichnet, dass** die poröse Struktur und/oder Wabenstruktur als eine auxetische Struktur augebildet werden.

2. Verfahren nach Anspruch 1, **dadurch gekennzeichnet, dass** der Schritt des schichtweisen Aufbauens des Gehäuses (3) ferner die Schritte aufweist:
Schichtweises Aufbauen einer Stützstruktur (13) mittels des generativen Fertigungsverfahrens;
anschließendes Ausbilden des Gehäuses (3) mittels des generativen Fertigungsverfahrens auf der Stützstruktur (13); und
Entfernen der Stützstruktur (13) nach Fertigstellung des Gehäuses (3).

3. Verfahren nach einem der vorangehenden Ansprüche, **dadurch gekennzeichnet, dass** der Schritt des schichtweisen Aufbauens des Gehäuses (3) ferner den Schritt des Ausbildens wenigstens einer Schale als eine Schale mit einer massiven Wandung aufweist.

4. Verfahren nach einem der vorangehenden Ansprüche, **dadurch gekennzeichnet, dass** die poröse Struktur als eine Schaumstruktur ausgebildet wird.

5. Verfahren nach einem der vorangehenden Ansprüche, **dadurch gekennzeichnet, dass** die auxetische Struktur in Richtung einer Hauptbelastung des Gehäuses ausgerichtet wird.

6. Verfahren nach einem der vorangehenden Ansprüche, **dadurch gekennzeichnet, dass** der Schritt des schichtweisen Aufbauens des Gehäuses (3) ferner den Schritt des Ausbildens des Gehäuses (3) mit wenigstens einer Zwischenschale (16) zwischen der äußeren Schale (10) und der inneren Schale (9) aufweist, wobei ein Strukturteil (11) zwischen der inneren Schale (9) und der Zwischenschale (16) und ein Strukturteil (11) zwischen der Zwischenschale (16) und der äußeren Schale (10) ausgebildet wird.

7. Verfahren nach einem der vorangehenden Ansprüche, **dadurch gekennzeichnet, dass** der Schritt des schichtweisen Aufbauens des Gehäuses (3) ferner den Schritt des Ausbildens des Gehäuses (3) an wenigstens einem Ende mit einem Abschluss (14, 15) aufweist.

8. Verfahren nach Anspruch 6 oder 7, **dadurch gekennzeichnet, dass** die Strukturteile (11) dieselbe Struktur oder Kombination von Strukturen aufweisen oder eine unterschiedliche Struktur oder Kombination von Strukturen aufweisen.

9. Triebwerksgehäuse, mit wenigstens zwei Schalen und einem zwischen den Schalen ausgebildeten Strukturteil, wobei das Gehäuse durch ein generatives Fertigungsverfahren hergestellt ist und das Strukturteil wenigstens eine poröse Struktur und/oder Wabenstruktur aufweist, **dadurch gekennzeichnet, dass** die poröse Struktur und/oder Wabenstruktur als eine auxetische Struktur ausgebildet sind.

10. Triebwerkgehäuse nach Anspruch 9, **dadurch gekennzeichnet, dass** die poröse Struktur als eine Schaumstruktur ausgebildet ist.

11. Triebwerkgehäuse nach Anspruch 9 oder 10, **dadurch gekennzeichnet, dass** wenigstens eine Schale aus Metall, einer Metalllegierung und/oder Keramik hergestellt ist.

## Claims

1. Method for producing, repairing and/or exchanging an engine housing of an aircraft engine, having at least two shells (9, 10, 16), between which a structural part (11) is formed, wherein the method comprises the following step:
Layer-by-layer construction of the at least two shells (9, 10, 16) together with the structural part (11) by means of a generative manufacturing method, wherein the structural part (11) has at least one porous structure and/or honeycomb structure, **characterized in that** the porous structure and/or honeycomb structure are formed as an auxetic structure.

2. Method according to claim 1, **characterized in that** the step of the layer-by-layer construction of the housing (3) further comprises the steps:
Layer-by-layer construction of a support structure (13) by means of the generative manufacturing method;
subsequent forming of the housing (3) on the support structure (13) by means of the generative manufacturing method; and
removal of the support structure (13) after completion of the housing (3).

3. Method according to one of the previous claims, **characterized in that** the step of the layer-by-layer construction of the housing (3) further comprises the step of forming at least one shell as a shell having a solid wall.

4. Method according to one of the previous claims, **characterized in that** the porous structure is formed as a foam structure.

5. Method according to one of the previous claims, **characterized in that** the auxetic structure is aligned in the direction of a main load of the housing.

6. Method according to one of the previous claims, **characterized in that** the step of the layer-by-layer construction of the housing (3) further comprises the step of forming the housing (3) with at least one intermediate shell (16) between the outer shell (10) and the inner shell (9), wherein a structural part (11) is formed between the inner shell (9) and the intermediate shell (16), and a structural part (11) is formed between the intermediate shell (16) and the outer shell (10).

7. Method according to one of the previous claims, **characterized in that** the step of the layer-by-layer construction of the housing (3) further comprises the step of forming the housing (3) with a terminal part (14, 15) on at least one end.

8. Method according to claim 6 or 7, **characterized in that** the structural parts (11) have the same structure or the same combination of structures or have a different structure or a different combination of structures.

9. Engine housing, having at least two shells and a structural part formed between the shells, wherein the housing is produced by means of a generative manufacturing method, and the structural part has at least one porous structure and/or honeycomb structure, **characterized in that** the porous structure and/or honeycomb structure are formed as an auxetic structure.

10. Engine housing according to claim 9, **characterized in that** the porous structure is formed as a foam structure.

11. Engine housing according to claim 9 or 10, **characterized in that** at least one shell is made of metal, a metal alloy and/or ceramics.

## Revendications

1. Procédé de fabrication, de réparation et/ou de remplacement d'un carter d'un turboréacteur d'aéronef, le procédé comprenant au moins deux coques (9, 10, 16) entre lesquelles est formé un élément structurel (11), le procédé comprenant l'étape suivante visant à :
construire par couches les au moins deux coques (9, 10, 16) conjointement avec l'élément structurel (11) au moyen d'un procédé de fabrication générative, l'élément structurel (11) ayant au moins une structure poreuse et/ou une structure en nid d'abeilles, **caractérisé en ce que** la structure poreuse et/ou la structure en nid d'abeilles est réalisée sous la forme d'une structure auxétique.

2. Procédé selon la revendication 1, **caractérisé en ce que** l'étape visant à construire par couches le boîtier (3) comprend en outre les étapes visant à :
construire par couches une structure de support (13) au moyen du procédé de fabrication générative ;
former ensuite le boîtier (3) sur la structure de support (13) au moyen du procédé de fabrication générative ; et retirer la structure de support (13) une fois la fabrication du boîtier (3) terminée.

3. Procédé selon l'une des revendications précédentes, **caractérisé en ce que** l'étape visant à construire par couches le boîtier (3) comprend en outre l'étape visant à former au moins une coque sous la forme d'une coque à paroi pleine.

4. Procédé selon l'une des revendications précédentes, **caractérisé en ce que** la structure poreuse est réalisée sous la forme d'une structure alvéolaire.

5. Procédé selon l'une des revendications précédentes, **caractérisé en ce que** la structure auxétique est de préférence orientée en direction d'une charge principale du boîtier.

6. Procédé selon l'une des revendications précédentes, **caractérisé en ce que** l'étape visant à construire par couches le boîtier (3) comprend en outre l'étape visant à pourvoir le boîtier d'au moins une coque intermédiaire (16) entre la coque extérieure (10) et la coque intérieure (9), un élément structurel (11) étant formé entre la coque intérieure (9) et la coque intermédiaire (16) et un élément structurel étant formé entre la coque intermédiaire (16) et la coque extérieure (10).

7. Procédé selon l'une des revendications précédentes, **caractérisé en ce que** l'étape visant à construire par couches le boîtier (3) comprend en outre l'étape visant à munir le boîtier d'une fermeture (14, 15) à au moins une extrémité.

8. Procédé selon l'une des revendications 6 ou 7, **caractérisé en ce que** les éléments structurels (11) ont la même structure ou combinaison de structures ou ont une structure ou combinaison de structures différente.

9. Carter de turboréacteur, comprenant au moins deux coques et un élément structurel formé entre les coques, le boîtier étant réalisé par un procédé de fabrication générative et l'élément structurel ayant au moins une structure poreuse et/ou une structure en nid d'abeilles, **caractérisé en ce que** la structure poreuse et/ou la structure en nid d'abeilles sont réalisées sous la forme d'une structure auxétique.

10. Carter de turboréacteur selon la revendication 9, **caractérisé en ce que** la structure poreuse est réalisée sous la forme d'une structure alvéolaire.

11. Carter de turboréacteur selon la revendication 9 ou 10, **caractérisé en ce qu'**au moins une coque est réalisée en métal, en alliage métallique et/ou en céramique.
